# EUROPÄISCHE PATENTSCHRIFT

(11) **EP 2 018 648 B1**
(45) Veröffentlichungstag und Bekanntmachung des Hinweises auf die Patenterteilung: **27.06.2012**
(21) Anmeldenummer: 07728991.6
(22) Anmeldetag: 10.05.2007
(51) Int. Cl.: H01H 85/22, H01H 85/30, H01H 85/00, H02B 11/26

(54) **SICHERUNGSANBAU FÜR EINE MITTELSPANNUNGSSCHALTANLAGE**
SAFETY ANNEX FOR A MEDIUM VOLTAGE SWITCHBOARD PLANT
Composant de sécurité pour une installation de distribution de moyenne tension.

(30) Priorität: 12.05.2006 DE 202006007908 U
(43) Veröffentlichungstag der Anmeldung: 28.01.2009
(73) Patentinhaber: SIEMENS AKTIENGESELLSCHAFT, 80333 München (DE)
(72) Erfinder: BAYER, Andreas, 67435 Neustadt (DE)
(86) Internationale Anmeldenummer: PCT/EP2007/054539
(87) Internationale Veröffentlichungsnummer: WO 2007/131940

(56) Entgegenhaltungen:
- DE-A1- 3 004 856
- DE-A1- 4 116 058
- DE-U1- 8 303 264

## Beschreibung

Die Erfindung betrifft einen Sicherungsanbau für eine gekapselte Schaltanlage mit einer Sicherungskammer und einem Sicherungseinschub zur Aufnahme einer Sicherung und eines Sicherungsstößels, wobei der Sicherungsanbau über wasserdichte Dichtungsmittel zwischen der Sicherungskammer und dem Sicherungseinschub sowie im Austrittsbereich des Sicherungsstößels aus dem Sicherungseinschub verfügt, wobei die wasserdichten Dichtungsmittel einen an der Sicherungskammer angeordneten ersten Flansch, einen an dem Sicherungseinschub angeordneten zweiten Flansch und eine erste Dichtung umfassen, welche zwischen dem ersten und dem zweiten Flansch angeordnet ist, an dem ersten Flansch und an dem zweiten Flansch Befestigungsmittel vorgesehen sind und die Befestigungsmittel Verschraubungen aufweisen.

Ein derartiger Sicherungsanbau ist aus der DE 41 16 058 A1 bekannt. Ein weiterer Sicherungsanbau ist aus der DE 30 04 856 A1 bekannt.

Ein ähnlicher Sicherungsanbau ist aus der Siemens-Druckschrift "Siemens HA 40.1, 2005" bekannt. Der dort offenbarte Sicherungsanbau weist eine Sicherungskammer und einen Sicherungseinschub auf. Der Sicherungseinschub ist ausgebildet zur Aufnahme eines Hochspannungssicherungseinsatzes als Sicherung sowie eines Sicherungsstößels, welcher Sicherungsstößel über einen Auslösemechanismus mit einem Schlagstift des Hochspannungssicherungseinsatzes in Kontakt steht. Der Sicherungsstößel des vorbekannten Sicherungsanbaus ist zum Auslösen eines Antriebsmechanismus der Schaltanlage vorgesehen. Bei diesem vorbekannten Sicherungsanbau ist im Sicherungseinschub zur Führung des Schlagstiftes ein Verschlussdeckel mit Dichtung vorgesehen.

Aufgabe der vorliegenden Erfindung ist es, einen Sicherungsanbau der eingangs erwähnten Art weiterzubilden, welcher bei einer einfachen Konstruktion eine verbesserte Dichtung aufweist.

Erfindungsgemäß wird diese Aufgabe bei einem Sicherungsanbau der eingangs erwähnten Art dadurch gelôst, dass an dem Sicherungs-stößel ein dritter Flansch vorgesehen ist, an welchem eine zweite Dichtung zur Abdichtung des Austrittsbereichs des Sicherungsstößels verklebt ist und der Sicherungsstößel über eine Aufweitung verfügt, welche mit einer Rastaufnahme in dem Sicherungseinschub einen Rastmechanismus unter Abdichtung des Austrittsbereichs des Sicherungsstößels bildet.

Mit derartigen Dichtungsmitteln zwischen der Sicherungskammer und dem Sicherungseinschub einerseits sowie im Austrittsbereich des Sicherungsstößels aus dem Sicherungseinschub andererseits sind Verbindungsbereiche des Sicherungsanbaus in einfacher Weise wasserdicht abgedichtet.

Mittels Verschraubungen als Befestigungsmittel wird in einfacher Weise eine Befestigung des Sicherungseinschubs an der Sicherungskammer ausgebildet, weil die Flansche beson-ders einfach unter Anordnung der Dichtungen zwischen den Flanschen aneinander verschraubt werden können.

Mittels einer zweiten Dichtung an dem dritten Flansch wird in einfacher Weise eine Abdichtung des Bereichs zwischen dem Sicherungsstößel und dem Sicherungseinschub ausgebildet, wobei mittels eines derartigen Rastmechanismus in einfacher Weise eine Befestigung des Sicherungsstößels an den Sicherungseinschub ausgebildet wird, welcher in vorteilhafter Weise eine Kraft auf die zweite Dichtung bewirkt.

In einer zweckmäßigen Ausgestaltung sind die erste und die zweite Dichtung aus einem EPDM-Kautschuk ausgebildet. Ein derartiger Ethylen-Propylen-Dien-Kautschuk weist besonders vorteilhafte Eigenschaften bezüglich seiner Elastizität und Dichtungsfähigkeit von Verbindungsbereichen, welche wasserdicht abgedichtet sein sollen, auf.

In einer weiteren zweckmäßigen Ausführung weist der EPDM-Kautschuk eine Härte von Shore 30 auf. Eine Härte von Shore 30 hat sich als für die Dichtungen besonders vorteilhaft erwiesen, um eine wasserdichte Abdichtung Bereiche des Sicherungsanbaus zu gewährleisten.

Die Erfindung wird im Folgenden anhand der Zeichnung und eines Ausführungsbeispiels mit Bezug auf die beiliegenden Figuren näher erläutert.

Es zeigen:
- Figur 1: eine Seitenansicht eines erfindungsgemäßen Sicherungsanbaus in einem zusammengebauten Zustand; und
- Figur 2: eine perspektivische Explosionsdarstellung des Sicherungsanbaus aus Figur 1.

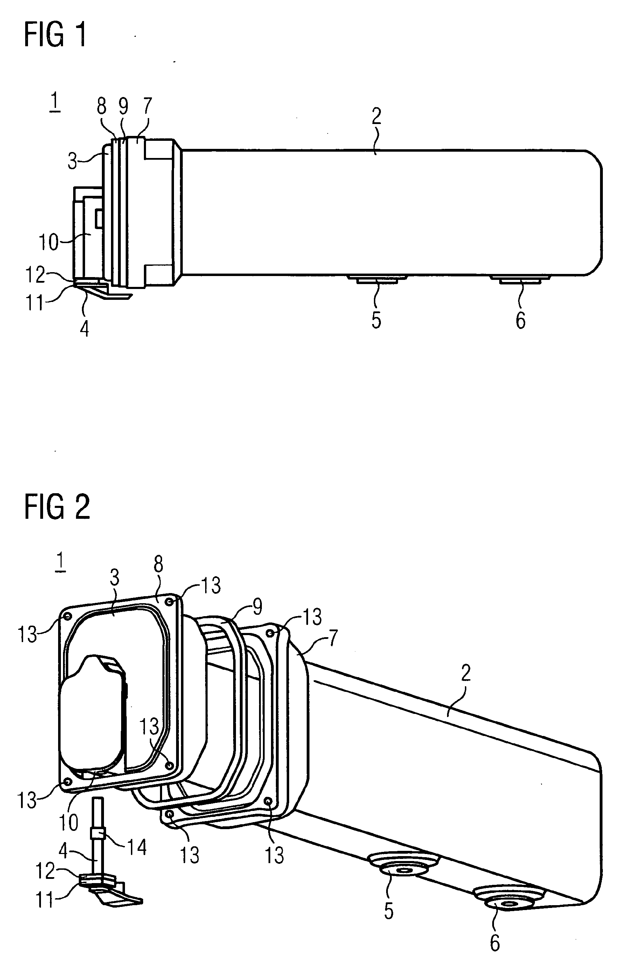

Figur 1 zeigt einen Sicherungsanbau 1 für eine gekapselte Schaltanlage mit einer Sicherungskammer 2, einem Sicherungseinschub 3 und einem Sicherungsstößel 4. Die Sicherungskammer 2 umfasst einen ersten Anschluss 5 und einen zweiten Anschluss 6 zum Ausbilden elektrischer Verbindungen mit der figürlich nicht dargestellten Schaltanlage, so dass ein in der Schaltanlage fließender Strom über eine in dem Sicherungsanbau angeordnete, figürlich nicht dargestellte Hochspannungssicherung geführt ist. Die Hochspannungssicherung dient bei solchen Schaltanlagen in bekannter Weise als Sicherung gegen Überströme. Die Sicherungskammer 2 verfügt über einen ersten Flansch 7, welcher an einem zweiten Flansch 8 des Sicherungseinschubs 3 befestigbar ist, wobei zwischen dem ersten Flansch 7 und dem zweiten Flansch 8 eine erste Dichtung 9 zur hermetischen Abdichtung des Verbindungsbereichs zwischen dem ersten Flansch 7 und dem zweiten Flansch 8 angeordnet ist. Der Sicherungseinschub 3 weist eine Aufnahme 10 für den Sicherungsstößel 4 auf. Der Sicherungsstößel 4 des Sicherungsanbaus 1 wird in die Aufnahme 10 des Sicherungseinschubs 3 eingeführt und dient zur Kopplung eines Auslösestiftes der figürlich nicht dargestellten Hochspannungssicherung mit einem ebenfalls figürlich nicht dargestellten Antriebsmechanismus zum Abschalten der Schaltanlage bei ausgelöster Hochspannungssicherung. An dem Sicherungsstößel 4 angeordnet ist ein dritter Flansch 11, an welchem eine zweite Dichtung 12 zur Abdichtung des Austrittsbereichs des Sicherungsstößels 4 verklebt ist, so dass in der eingeführten Position des Sicherungsstößels 4 in der Aufnahme 10 der Austrittsbereich des Sicherungsstößels 4 aus der Aufnahme 10 bzw. dem Sicherungseinschub 3 ebenfalls wasserdicht abgedichtet ist. In der eingeführten Position des Sicherungsstößels 4 in der Aufnahme 10 wird der Sicherungsstößel 4 über einen einfachen Rastmechanismus im Sicherungseinschub 3 gehalten, wobei durch den Rastmechanismus in Form einer Aufweitung 14 des Sicherungsstößels 4, welche in eine figürlich nicht dargestellte Rastaufnahme des Sicherungseinschubs 3 eingreift, eine ausreichende Kraft auf die Dichtung zur hermetischen Abdichtung des Verbindungsbereichs zwischen dem Sicherungseinschub 3 und dem Sicherungsstößel 4 ausgebildet ist.

Figur 2 zeigt eine perspektivische Explosionsdarstellung des Sicherungsanbaus 1 mit voneinander getrennten Einzelteilen. Der Sicherungseinschub 3 mit seinem zweiten Flansch 8 ist zur Aufnahme einer Hochspannungssicherung geeignet, welche mit dem Sicherungseinschub 3 in die Sicherungskammer 2 eingeführt wird. Im eingebauten Zustand ist die Sicherung in bekannter Weise mit dem ersten Anschluss 5 und dem zweiten Anschluss 6 elektrisch leitend verbunden, wobei die Anschlüsse 5 und 6 mit der Schaltanlage ebenfalls in elektrischer Verbindung stehen. Zwischen dem zweiten Flansch 8 und dem ersten Flansch 7 der Sicherungskammer 2 ist die erste Dichtung 9 angeordnet, welche im zusammengebauten Zustand den Bereich zwischen dem ersten Flansch 7 und dem zweiten Flansch 8 abdichtet, welche Flansche 7 und 8 mittels Befestigungsmitteln in Form von Verschraubungen 13 aneinander befestigt sind. Die Figur 2 zeigt des Weiteren den Sicherungsstößel 4 mit dem dritten Flansch 11 und der daran verklebten Dichtung 12 in seinem nicht eingebauten Zustand. An dem Sicherungsstößel 4 angeordnet ist die Aufweitung 14 als Teil des Rastmechanismus zur Befestigung des Sicherungsstößels in der Aufnahme 10 des Sicherungseinschubes 3. Die zweite Dichtung 12 dichtet somit den Bereich zwischen dem Sicherungseinschub 3 und dem Sicherungsstößel 4 im eingebauten Zustand des Sicherungsstößels 4 hermetisch und insbesondere wasserdicht ab. Für die erste Dichtung 9 und die zweite Dichtung 12 wird als bevorzugtes Material ein EPDM-Kautschuk, also ein Ethylen-Propylen-Dien-Kautschuk verwendet, welcher besonders bevorzugt über eine Shorehärte von Shore 30 verfügt, weil mit diesem Material eine hermetische Abdichtung der Bereiche zwischen dem Sicherungseinschub und dem Sicherungsstößel 4 sowie dem Sicherungseinschub 3 und der Sicherungskammer 2 ausgebildet ist.

### Bezugzeichenliste

- 1: Sicherungsanbau
- 2: Sicherungskammer
- 3: Sicherungseinschub
- 4: Sicherungsstößel
- 5: Erster Anschluss
- 6: Zweiter Anschluss
- 7: Erster Flansch
- 8: Zweiter Flansch
- 9: Erste Dichtung
- 10: Aufnahme
- 11: Dritter Flansch
- 12: Zweite Dichtung
- 13: Verschraubungen
- 14: Aufweitung

## Patentansprüche

1. Sicherungsanbau (1) für eine Mittelspannungsschaltanlage mit einer Sicherungskammer (2) und einem Sicherungseinschub (3) zur Aufnahme einer Sicherung und eines Sicherungsstößels (4), wobei
der Sicherungsanbau (1) über wasserdichte Dichtungsmittel (7, 8, 9, 11, 12,13) zwischen der Sicherungskammer (2) und dem Sicherungseinschub (3) sowie im Austrittsbereich des Sicherungsstößels (4) aus dem Sicherungseinschub (3) verfügt, wobei
die wasserdichten Dichtungsmittel (7, 8, 9, 11, 12,13) einen an der Sicherungskammer (2) angeordneten ersten Flansch (7), einen an dem Sicherungseinschub (3) angeordneten zweiten Flansch (8) und eine erste Dichtung (9) umfassen, welche zwischen dem ersten und dem zweiten Flansch (7, 8) angeordnet ist,
an dem ersten und an dem zweiten Flansch (7, 8) Befestigungsmittel (13) vorgesehen sind und
die Befestigungsmittel (13) Verschraubungen (13) aufweisen,
**dadurch gekennzeichnet, dass**
an dem Sicherungsstößel (4) ein dritter Flansch (11) vorgesehen ist, an welchem eine zweite Dichtung (12) zur Abdichtung des Austrittsbereichs des Sicherungsstößels (4) verklebt ist, und
der Sicherungsstößel (4) über eine Aufweitung (14) verfügt, welche mit einer Rastaufnahme in dem Sicherungseinschub (3) einen Rastmechanismus unter Abdichtung des Austrittsbereichs des Sicherungsstößels (4) bildet.

2. Sicherungsanbau (1) nach Anspruch 1,
**dadurch gekennzeichnet, dass**
die erste und die zweite Dichtung (9, 12) aus einem EPDM-Kautschuk ausgebildet sind.

3. Sicherungsanbau (1) nach Anspruch 2,
**dadurch gekennzeichnet, dass**
der EPDM-Kautschuk eine Härte von Shore 30 aufweist.

## Claims

1. Fuse attachment (1) for a medium-voltage switchgear assembly having a fuse chamber (2) and having a fuse insert (3) for holding a fuse and a fuse plunger (4),
wherein
the fuse attachment (1) has watertight sealing means (7, 8, 9, 11, 12, 13) between the fuse chamber (2) and the fuse insert (3), as well as in the outlet area of the fuse plunger (4) from the fuse insert (3), wherein
the watertight sealing means (7, 8, 9, 11, 12, 13) have a first flange (7), which is arranged on the fuse chamber (2), a second flange (8) which is arranged on the fuse insert (3), and a first seal (9), which is arranged between the first and the second flanges (7, 8),
attachment means (13) are provided on the first and on the second flanges (7, 8), and
the attachment means (13) have screw connections (13),
**characterized in that**
a third flange (11) is provided on the fuse plunger (4), to which third flange (11) a second seal (12) is adhesively bonded in order to seal the outlet area of the fuse plunger (4), and the fuse plunger (4) has a widened area (14) which, together with a latching holder in the fuse insert (3), forms a latching mechanism which seals the outlet area of the fuse plunger (4).

2. Fuse attachment (1) according to Claim 1,
**characterized in that**
the first and the second seals (9, 12) are formed from an EPDM rubber.

3. Fuse attachment (1) according to Claim 2,
**characterized in that**
the EPDM rubber has a Shore hardness of 30.

## Revendications

1. Dispositif ( 1 ) annexe de coupe circuit pour une installation de distribution de moyenne tension comprenant une chambre ( 2 ) de coupe circuit et un tiroir ( 3 ) de coupe circuit pour la réception d'un coupe circuit et d'un poussoir ( 4 ) de coupe circuit, dans lequel
le dispositif ( 1 ) annexe de coupe circuit dispose de moyens ( 7, 8, 9, 11, 12, 13 ) d'étanchéité étanches à l'eau entre la chambre ( 2 ) de coupe circuit et le tiroir ( 3 ) de coupe circuit, ainsi que dans la zone où le poussoir ( 4 ) de coupe circuit sort du tiroir ( 3 ) de coupe circuit, dans lequel les moyens ( 7, 8, 9, 11, 12, 13 ) d'étanchéité étanches à l'eau comprennent une première bride ( 7 ) disposée sur la chambre ( 2 ) de coupe circuit, une deuxième bride ( 8 ) disposée sur le tiroir ( 3 ) de coupe circuit et un premier joint ( 9 ), lequel est disposé entre la première et la deuxième brides ( 7, 8 ),
des moyens ( 13 ) de fixation sont prévus sur la première et sur la deuxième brides ( 7, 8 ) et
les moyens ( 13 ) de fixation ont des vissages ( 13 ),
**caractérisé en ce que**
il est prévu sur le poussoir ( 4 ) de coupe circuit une troisième bride ( 11 ), sur laquelle est collé un deuxième joint ( 12 ) pour rendre étanche la zone de sortie du poussoir ( 4 ) de coupe circuit, et
le poussoir ( 4 ) de coupe circuit dispose d'un élargissement ( 14 ), qui forme, avec un logement d'encliquetage du tiroir ( 3 ) de coupe circuit, un mécanisme d'encliquetage avec étanchéité de la zone de sortie du poussoir ( 4 ) de coupe circuit.

2. Dispositif ( 1 ) annexe de coupe circuit suivant la revendication 1,
**caractérisé en ce que**
le premier et le deuxième joints ( 9, 12 ) sont en caoutchouc EPDM.

3. Dispositif ( 1 ) annexe de coupe circuit suivant la revendication 2,
**caractérisé en ce que**
le caoutchouc EPDM a une dureté Sshore de 30.
